Europäisches Patentamt

European Patent Office

Office européen des brevets

(11) Publication number: **0 316 479**
**A1**

## (12) EUROPEAN PATENT APPLICATION

(21) Application number: **87117101.3**

(22) Date of filing: **19.11.87**

(51) Int. Cl.⁴: **A23G 3/20 , A23P 1/02**

(43) Date of publication of application:
**24.05.89 Bulletin 89/21**

(84) Designated Contracting States:
**BE DE NL**

(71) Applicant: **The Hamada Food Industries, Inc.**
**86 Wakabayashi-cho 2-chome**
**Yao-shi Osaka-Fu(JP)**

(72) Inventor: **Mizota, Gohei, c/o The Hamada Food**
**Ind.Inc.**
**86 Wakabayashi-cho, 2-chome**
**Yoa-Shi, Osaka-Fu(JP)**

(74) Representative: **Ruschke, Olaf et al**
**Pienzenauerstrasse 2**
**D-8000 München 80(DE)**

(54) **Manufacturing method for layerlike multicolored molding.**

(57) A manufacturing method for a layerlike multicolored molding is described by which a molding is manufactured from powdery materials using an integrated mold which is composed of both the male (12) and female (2) moieties, each of differently colored powdery materials is dropped into the cavity of the female mold (6) separately but concurrently so that these materials may deposite almost evenly without forming any difference in level between the deposited materials, and then, from the upside, the male mold is forced toward the female mold to form the molding from the deposited materials at one stroke.

Fig. 1

Fig. 2

## Manufacturing Method for Layerlike Multicolored Molding

(Applicable industrial fields)

The present invention relates to a manufacturing method for foods, confectionery, luxury foods, and the like. The purpose of the invention is to obtain molded products in the form of tablet, cylinder, and the like in an industrially advantageous way by molding them integratedly from differently colored, edible or nonedible powdery materials.

(The prior art and its drawbacks)

As for the prior art molding method with use of an integrated mold composed of male and female moieties, the following method has been common. That is, the female mold is first mounted horizontally, and food material such as rice granules, starch and powdery glucose by a desired amount is filled into the cavity of the female mold. Then the male mold, which has been mounted upside, is forced toward the female mold to compress layerlike and solidify the powdery material filled into the cavity of the female mold, and then the male mold is withdrawn up. Again, another differently colored powdery material is fed onto the above compressed layerlike material in the cavity of the female mold, and the same operations as above mentioned are repeated to obtain a complete layerlike molding.

However, this conventional method involves the following drawbacks. First, it is essential.to conduct operations such as filling and compressing repeatedly the same times as the number of the specified colors. Second, in some moldings, the layers of different colors are apt to separate from each other.

(Problems to be resolved by the invention)

Problems to be resolved by the invention, in which an integrated mold composed of both male and female moieties is utilized again, are to integrate the conventional procedures to the only procedure, and to secure molded products eliminating delamination between differently colored layers and color shear or gradation along the borderline between two colored layers.

The present invention should resolve the above problems in an industrially advantageous way.

(Constitution of the invention)

In the method of the invention, an integrated mold is composed of the both male and female moieties as above mentioned. The internal cavity formed by the male and female molds is conformed to the contour of the aimed molding. The female mold on the downside and the male mold on the upside are horizontally mounted so that their centers are positioned in one vertical line. The male mold is freely travelable upward and downward.

The powdery molding material such as glucose, rice granules, and cane sugar is dividened into two or more groups. Then each group is colored differently, for example white and red. Each differently colored group is placed in a different hopper, respectively. On that occasion, the weight or volume of each group may be the same or different from each other. The powdery molding materials may be blended with other ingredients such as glue, nutriments, flavors or spices and seasonings.

The powdery molding materials are required to have similar average particle size and density goup by group. The reason for this is to give a similar resistance to the compressive pressure when forcing the male mold and thereby to prevent the molded products from damage or destruction due to the compressing stress.

Differently colored (for example, red and white) powdery molding materials in the different hoppers are transferred through differnt tubes, to the upper section of the female mold, respectively, and are dropped into the cavity of the female mold concurrently. While the dropping amount may be arbitrary color by color, thus the colored powdery molding materials are deposited in the cavity of the female mold separately color by color to elevate the depositing level, respectively. On that occasion, however, it is required that dropping the materials is conducted so that the depositing levels may be maintained always almost evenly to each other or at the almost same horizontal level. This is one of the characteristics of the invention. When the given depositing amount is reached, feeding the materials is stopped, and the male mold is forced toward the female mold to compression mold the materials deposited in the female mold. Then, the male mold is withdrawn up, and the molding is taken out of the female mold. The product is the aimed layerlike multicolored molding. Thus, the purpose of the invention is achieved.

However, other means may be optionally employed in order that differently colored powdery molding materials (for example, red and white) are more effectively prevented from any mixed deposition into the cavity of the female mold. For example, it may be effective that a thin, and travelable partitioning plate is vertically placed between the differently colored materials. Or, the lower edge of such a partitioning plate may be contacted with the upper side of the female mold; or the plate may be inserted into the cavity of the female mold, and then drawn up slowly as the level of the deposited powdery materials is elevated. After the completion of filling, the partitioning plate is withdrawn and the male mold is forced down to compression mold the aimed molding product.

(Effects of the invention)

The present invention provides two principal effects. First, processes of filling the powdery molding materials and forcing the male mold can be completed at one stroke, respectively. Second, the obtained molding has distinct and straight borderlines between differently colored layers with neither delamination threat by external forces, nor blurred areas due to color mixture.

Next, more detailed descriptions on this invention are given as follows, referring to the attached figures. The illustrated mold, which comprises its male and female counterparts, is the one that has been well known by anyone skilled in the art. It is just cited as a means to facilitate understanding the nature of the invention, but never limits the technical scope of the invention.

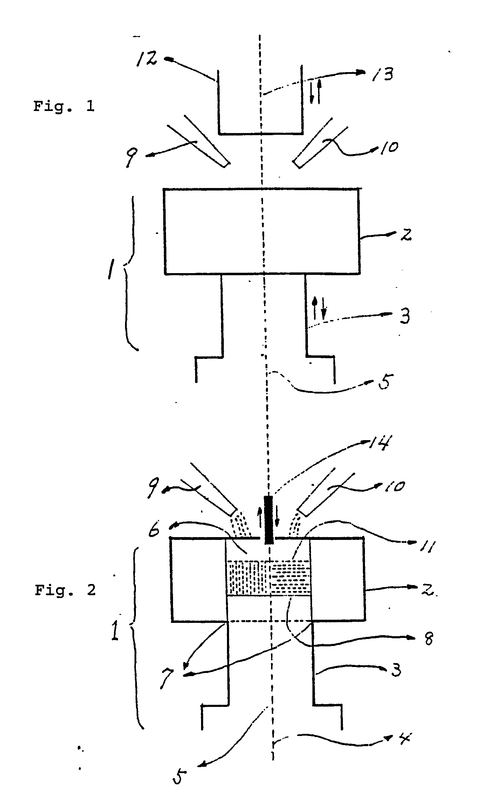

Fig. 1 illustrates the front view of the female mold;

Fig. 2 shows the vertically sectional view (the section including the perpendicular line).

The female mold 1 comprises its molding mother mold 2 and compressing bar 3.

The vertical center line 4 of the mother mold 2 is coincident with the perpendicular line 5. The mother mold 2 is positioned and fixed in the horizontal direction.

(The device for fixing is omitted in the drawing).

The inside of the mother mold 2 is provided with a penetrating canal 7 to form a cavity 6. The longitudinal center line 4 of the compressing bar 3 is coincident with the perpendicular line 5. The compressing bar 3 moves up and down along its longitudinal center line 4. (The device for movement is omitted in the drawing.) The upper end 8 of the compressing bar 3 is inserted up into the canal 7 of the mother mold 1. The penetrating canal 7 and the compressing bar 3 move up and down (like the arrow mark) contacting with each other. When the cavity 6 which is formed by the mother mold 1 and the upper end 8 formed by the mother mold 1 and the upper end 8 of the bar 3 reaches the desired volume, the bar is stopped.

Molding powder is fed through pipes 9 and 10 into the cavity. (The storage tanks for molding powder are omitted in the drawing.) The colors of molding powder from pipes 9 and 10 are different from each other. Needless to say, it is evident that the number of pipes for feeding molding powder may be more than two. When molding powder is fed into the cavity 6, it is necessary to avoid any formation of difference in level by color at the upper surface 11 of the deposited molding powder. In other words, molding powder should be fed so that its upper surface becomes roughly even. When the deposited molding powder reaches the desired amount, the feeding is stopped.

The male mold 12 is positioned above the female mold 2. The longitudinal center line 13 of the male mold 2 is coincident with the perpendicular line 5 including the longitudinal center line 4 of the female mold 1. The male mold 12 is pushed down into the penetrating canal 7 in the female mother mold 2. The inner wall of the canal 7 and the outer wall of the male mold 12 move up and down contacting with each other to compress the deposited molding powder. It is evident for one skilled in the art that it is necessary that pipes 9 and 10 are withdrawn back beyond the operating area of the male mold 12 before the male mold operates. (The device for withdrawal is omitted in the drawing.)

In addition, it may be allowed that a partition plate that is movable up and down and removable away is provided with between the cavity 6 of the female mother mold 2 and the lower end of the male mold 12 so that the falling-down of molding powder may be readily distinguished by color.

Thus, molding powder is compression molded in the cavity 6 by the action of the female mother mold 2 and the compressing bar 3.

Immediately after being molded, the compressing bar 3 is pushed down, and the male mold 12 is pushed up to remove them from the female mother mold 2. The molding remains in the cavity 6 of the mother mold 2. Then the molding is pushed downward or upward to remove it out of the mother mold 2. Thus, the desired molding is obtained successfully.

(Examples)

Example 1

Uniform powder mixture was prepared from 93 weight % crystalline glucose, 5 weight % starch, and 2 weight % citric acid, and divided into two aliquots of 7 weight parts and 3 weight parts. The aliquot of 3 weight parts was colored light reddish-purple using an anthocyanin dye.

As a mold, there was installed a mold which was composed of male and female moieties and had a cylindrical cavity with 1-cm diameter and 2-cm depth between both moieties. The cavity of the female mold was filled with above 7 weight-part white material and 3 weight-part light reddish-purple material separately but concurrently by feeding them from different hoppers through different tubes, respectively.

On that occasion, both materials were filled into the cavity so that any difference in upper level might not be presented along the borderline between them, or they might provide an even level.

Both materials were filled up to a prescribed amount, and the male mold was forced down toward the female mold with a 200 kg/cm$^2$ pressure.

The molding was taken out of the female mold, resulting in a 1-cm$^3$ solid candy.

This candy was composed of white and light reddish-purple layers with a distinct borderline between them.

Example 2

The same materials as in Example 1 were filled into the cavity of the female mold by the same amount as in Example 1. On that occasion, an 8 x 25-cm rectangular partitioning plate was inserted along the interface between the materials from one respective hopper, and lowered down close to the upper level of deposited materials in the cavity of the female mold.

Then, the partitioning plate was raised up gradually as the deposited level was elevated so that the partitioning plate might not contact with the deposite level. On completing the filling of the materials, the partitioning plate was withdrawn away, and then the male mold was forced down toward the female mold.

An integrated solid candy was obtained with was composed of white and light reddish-purple layers with a distinct and straight borderline between them.

Claims

1. A manufacturing method for a layerlike multicolored molding, characterized by manufacturing a molding from powdery materials using an integrated mold which is composed of both the male and female moieties, each of differently colored powdery materials is dropped into the cavity of the female mold separately but concurrently so that these materials may deposite almost evenly without forming any difference in level between the deposited materials, and then, from the upside, the male mold is forced toward the female mold to form the molding from the deposited materials at one stroke.

2. Method according to claim 1, characterized in that in which a travelable partitioning plate is provided at each boundary between two differently colored materials which are concurrently dropped.

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | PATENT ABSTRACTS OF JAPAN, vol. 7, no. 126 (M-219)[1271], 31st May 1983; & JP-A-58 44 997 (AKIRA HIRAI) 16-03-1983 * Abstract * | 1-2 | A 23 G 3/20 A 23 P 1/02 |
| Y | PATENT ABSTRACTS OF JAPAN, vol. 10, no. 17 (C-324)[2074], 23rd January 1986; & JP-A-60 172 917 (SHISEIDO K.K.) 06-09-1985 * Abstract * | 1-2 | |
| A | GB-A- 174 849 (WALTER MILLNER LIVENS) * Claims 1,2 * | 1-2 | |

**TECHNICAL FIELDS SEARCHED (Int. Cl.4)**

A 23 G
B 30 B
A 23 P

The present search report has been drawn up for all claims

| Place of search | Date of completion of the search | Examiner |
|---|---|---|
| THE HAGUE | 15-07-1988 | SANTOS Y DIAZ A.I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)